# EUROPÄISCHE PATENTSCHRIFT

(11) **EP 2 558 745 B1**
(45) Veröffentlichungstag und Bekanntmachung des Hinweises auf die Patenterteilung: **31.12.2014**
(21) Anmeldenummer: 11706577.1
(22) Anmeldetag: 02.03.2011
(51) Int. Cl.: F16H 3/095, F16H 37/04

(54) **DOPPELKUPPLUNGS-GRUPPENGETRIEBE UND VERFAHREN ZUR BETÄTIGUNG EINES DOPPELKUPPLUNGS-GRUPPENGETRIEBES**
DUAL-CLUTCH GROUP TRANSMISSION, AND METHOD FOR ACTUATING A DUAL-CLUTCH GROUP TRANSMISSION
TRAIN D'ENGRENAGES À DOUBLE EMBRAYAGE ET PROCÉDÉ POUR ACTIONNER UN TRAIN D'ENGRENAGES À DOUBLE EMBRAYAGE

(30) Priorität: 13.04.2010 DE 102010003924
(43) Veröffentlichungstag der Anmeldung: 20.02.2013
(73) Patentinhaber: ZF Friedrichshafen AG, 88038 Friedrichshafen (DE)
(72) Erfinder: RENNER, Stefan, 78351 Bodman-Ludwigshafen (DE)
(74) Vertreter: Gebhard, Wolfgang
(86) Internationale Anmeldenummer: PCT/EP2011/053086
(87) Internationale Veröffentlichungsnummer: WO 2011/128148

(56) Entgegenhaltungen:
- EP-A2- 2 149 725
- DE-A1- 10 133 629
- DE-A1-102006 015 661
- DE-A1-102007 047 671
- US-A1- 2008 188 342

## Beschreibung

Die Erfindung betrifft ein Doppelkupplungs-Gruppengetriebe gemäß dem Oberbegriff des Patentanspruchs 1.

Gruppengetriebe und Doppelkupplungsgetriebe sind bekannte Getriebearten. Außerdem sind auch Gruppengetriebe bereits bekannt, die eine Doppelkupplung aufweisen.

Gruppen- bzw. Mehrgruppengetriebe haben den Vorteil, dass sie durch die Kombination von zwei oder drei Getriebegruppen eine große Gangzahl zur Verfügung stellen, effizient im Betrieb sind und hinsichtlich ihrer Gangzahl in einer kompakten Bauform realisierbar sind. Sie unterliegen jedoch, wie alle manuellen oder automatisierten Schaltgetriebe, grundsätzlich einer Zugkraftunterbrechung. Doppelkupplungsgetriebe haben hingegen den Vorteil, dass sie über eine sequenzielle Schaltabfolge, bei der jeweils ein der einen Kupplung zugeordneter Gang aktiv ist, während ein der anderen Kupplung zugeordneter Anschlussgang vorgewählt ist, grundsätzlich lastschaltbar sind, also weitgehend zugkraftunterbrechungsfreie Gangwechsel ermöglichen und damit einen hohen Fahrkomfort bieten.

Daher erscheint eine Kombination beider Getriebearten sinnvoll, insbesondere für Nutzfahrzeuge wie beispielsweise Lastkraftwagen für den Fernverkehr, die einerseits eine hohe Gangzahl mit einer entsprechenden Getriebespreizung benötigen und andererseits einen hohen Fahrkomfort sowie eine hohe Betriebssicherheit bieten sollen. Allerdings sind bei derartig konzipierten Getrieben nicht alle Gänge per se lastschaltbar. Wenn das Gruppengetriebe, wie üblich, über eine Eingangs- bzw. Splittergruppe und eine Hauptgruppe in Vorgelegebauweise sowie eine nachgeschaltete Bereichsgruppe in Planetenbauweise verfügt, wobei die Bereichsgruppe zwischen zwei Gangbereichen umschaltbar ist, sind zwar, je nach Momentenfluss der aufeinanderfolgenden Gänge, die meisten Gänge mit Hilfe der Doppelkupplung innerhalb der beiden Gangbereiche als Lastschaltgänge realisierbar. Der Umschaltvorgang der Bereichsgruppe selbst ist in der Regel jedoch nicht zugkraftunterstützt. Da der Umschaltvorgang zudem vergleichsweise lange dauert, wird dies vom Fahrer regelmäßig bemerkt und als störend empfunden.

In der DE 10 2008 054 477 A1 der Anmelderin ist ein Mehrgruppengetriebe vorgeschlagen, das zugkraftunterstützte Gangwechsel ermöglicht. Das Mehrgruppengetriebe weist eine eingangsseitige Splittergruppe mit drei Gangkonstanten, eine dreigängige Hauptgruppe und eine nachgeschaltete Bereichsgruppe auf. Die Splittergruppe und die Hauptgruppe sind in einer Bauraum sparenden und lastverteilungsausgewogenen Vorgelegebauweise mit zwei gemeinsamen achsparallelen Vorgelegewellen ausgebildet. Die Bereichsgruppe ist als ein Planetengetriebe mit einem zentralen Sonnenrad, einem von einem Planetenträger geführten Planetenradsatz und einem äußeren Hohlrad ausgebildet. Über eine Anfahrkupplung ist eine Getriebeeingangswelle an ihrem einen Ende mit einer Antriebswelle eines Antriebsmotors verbindbar. Die Getriebeeingangswelle ist an ihrem anderen Ende mittels einer Schaltvorrichtung direkt, also ohne Verzweigung über die Vorgelegewellen, mit einer axial dahinter angeordneten Getriebehauptwelle verbindbar. Die Getriebehauptwelle ist an ihrem ausgangsseitigen Ende mit dem Sonnenrad der Bereichsgruppe fest verbunden. Weiterhin ist eine Lastschaltkupplung angeordnet, über die ein auf der Getriebeeingangswelle drehbar gelagertes Losrad der ersten, motornahen Gangkonstante mit der Antriebswelle verbindbar ist, so dass die Lastschaltkupplung die Anfahrkupplung überbrückt. Die Anfahrkupplung und die Lastschaltkupplung können beispielsweise als eine Doppelkupplung ausgebildet sein, deren gemeinsamer Kupplungskorb mit der Antriebswelle verbunden ist.

Durch die unabhängig vom Schaltzustand der Anfahrkupplung schaltbare erste Eingangskonstante und die Möglichkeit der Direktverbindung der Getriebeeingangswelle mit der Getriebehauptwelle können gleichzeitig ein direkter und ein verzweigter Leistungsweg angewählt werden und durch ein überschneidendes Öffnen bzw. Schließen der beiden Kupplungen im Antriebsfluss ineinander übergehen. Dadurch sind zwar mehrere unter Last schaltbare Gangwechsel bei diesem Getriebe möglich. Ein Umschalten der nachgeschalteten Bereichsgruppe zwischen einem durch das Planetengetriebe übersetzten unteren Gangbereich und einem durch ein Verblocken des Planetengetriebes nicht übersetzten oberen Gangbereich ist jedoch nicht zugkraftunterstützt.

Aus der DE 10 2008 001 200 A1 ist ein weiteres zugkraftunterstütztes Mehrgruppengetriebe mit einer Splittergruppe, einer Hauptgruppe und einer Bereichsgruppe sowie einer Doppelkupplung bekannt. Darin ist die eine Kupplung als eine Anfahrkupplung zur Verbindung einer Antriebswelle eines Antriebsmotors mit einer Getriebeeingangswelle und die andere Kupplung als eine Lastschaltkupplung zum Schalten eines Zwischengangs über eine Verbindung der Antriebswelle mit einer die Getriebegruppen durchsetzenden Getriebehauptwelle ausgebildet. Die Getriebeeingangswelle ist als eine Hohlwelle ausgebildet, die koaxial auf der Getriebehauptwelle angeordnet ist. Während eines Gangwechsels wird die Lastschaltkupplung eingerückt und damit ein Zwischengang geschaltet, wodurch die Splittergruppe und die Hauptgruppe lastfrei schaltbar sind, ohne die Anfahrkupplung auszukuppeln. Durch die direkte Verbindung der Antriebswelle mit der Getriebehauptwelle entspricht der Zwischengang dem Direktgang der Splittergruppe und der Hauptgruppe. Die Lastschaltkupplung stützt dabei im Schlupfbetrieb das Motormoment am Fahrzeugabtrieb ab, wobei die Motordrehzahl synchronisiert wird. Durch die Drehmomentabstützung wird ein Zugkrafteinbruch während einer Neutralstellung der Splittergruppe und/oder der Hauptgruppe beim Wechsel vom Ursprungsgang in den Zielgang verhindert.

Ist die Getriebehauptwelle in üblicher Weise an ihrem ausgangsseitigen Ende mit einem Sonnenrad der Bereichsgruppe direkt, mit einer Getriebeausgangswelle am Abtrieb der Bereichsgruppe aber nur indirekt verbunden, so kann der Zwischengang beim Umschalten der Bereichsgruppe, bei dem der Kraftfluss beispielsweise zwischen einer Kopplung eines Hohlrades mit einem Gehäuse und einer Kopplung des Hohlrades mit der mit einem Planetenträger verbundenen Getriebeausgangswelle wechsel, keine Zugkraftunterstützung zur Verfügung stellen. In der DE 10 2008 001 200 A1 wird diesbezüglich eine Abhilfe vorgeschlagen, indem das Hauptgetriebe eine zusätzliche Hohlwelle aufweist, die koaxial auf der Hauptwelle angeordnet ist und auf der Losräder und zugehörige Schaltvorrichtungen des Hauptgetriebes angeordnet sind. Die Hohlwelle ist an ihrem ausgangsseitigen Ende anstelle der Getriebehauptwelle mit dem Sonnenrad verbunden, während die Getriebehauptwelle kopplungsfrei durch die Bereichsgruppe hindurchgeführt und direkt mit der Getriebeausgangswelle verbunden ist. Bereichsumschaltungen können somit durch temporäres Schalten des Direktganges des Gesamtgetriebes als Zwischengang beim Gangwechsel ebenfalls zugkraffunterstützt sein. Dadurch ist jedoch die Bereichsgruppe selbst noch nicht lastumschaltbar. Bei Getriebekonzepten, die keine Zwischengangschaltungen vorsehen, ist daher die Bereichsumschaltung auch weiterhin nicht zugkraftunterstützt. Zudem ist die sich bis zu dem Sonnenrad erstreckende Hohlwelle relativ lang, so dass die Lagerung der durch die Hohlwelle hindurch geführten, sich von der Anfahrkupplung bis zum Getriebeausgang erstreckenden sehr langen Getriebehauptwelle eher weniger optimal ist.

Des Weiteren ist aus der DE10133629A1 ein Lastschaltgetriebe in Form eines Doppelkupplungs-Gruppengetriebes nach dem Oberbegriff des Anspruches 1 bekannt.

Vor diesem Hintergrund liegt der Erfindung die Aufgabe zugrunde, ein Doppelkupplungs-Gruppengetriebe mit einer Splittergruppe und einer Hauptgruppe in Vorgelegebauweise und einer Bereichsgruppe in Planetenbauweise vorzustellen, das lastschaltbare Gangwechsel, insbesondere bei einer Schaltung der Bereichsgruppe ermöglicht und vergleichsweise kurze Getriebewellen aufweist.

Die Lösung dieser Aufgabe ergibt sich aus den Merkmalen des Anspruchs 1, während vorteilhafte Ausgestaltungen und Weiterbildungen der Erfindung den Unteransprüchen entnehmbar sind.

Der Erfindung liegt die Erkenntnis zugrunde, dass in einem Gruppengetriebe, welches über eine Doppelkupplung mit zwei Motorkupplungen zur Verbindung jeweils einer Getriebeeingangswelle mit einem Antriebsmotor verfügt, und das eine vorgeschaltete Splittergruppe, eine Hauptgruppe in Vorgelegebauweise sowie eine nachgeschaltete Bereichsgruppe in Planetenbauweise umfasst, mit Hilfe einer Getriebestruktur, die eine Direktverbindung zwischen einer ersten Getriebeeingangswelle und einer Getriebehauptwelle sowie eine davon unabhängige Wirkverbindung zwischen einer zweiten Getriebeeingangswelle und einem Planetenträger der Bereichsgruppe ermöglicht, ein Gangwechsel mit einer Kopplungsänderung der Planetengetriebekomponenten unter Last, d.h. ohne spürbare Unterbrechung der Zugkraft durchführbar ist.

Demnach geht die Erfindung aus von einem Doppelkupplungs-Gruppengetriebe, mit einer Splittergruppe, einer Hauptgruppe und einer Bereichsgruppe, die in einem Antriebsstrang axial hintereinander angeordnet sind, bei dem die Splittergruppe und die Hauptgruppe als Vorgelegegetriebe mit zumindest einer gemeinsamen Vorgelegewelle und mit mehreren Gangkonstanten oder Gängen ausgebildet sind, bei der die Bereichsgruppe als ein Planetengetriebe mit einem radial äußeren Hohlrad, einem zentralen Sonnenrad und einem dazwischen wälzenden Planetenradsatz ausgebildet ist, wobei die Planetenräder von einem Planetenträger geführt sind, mit einer ersten, inneren Getriebeeingangswelle, die mit einer ersten eingangsseitigen Kupplung verbunden ist, mit einer zweiten, äußeren Getriebeeingangswelle, die als eine Hohlwelle koaxial auf der inneren Getriebeeingangswelle angeordnet und mit einer zweiten eingangsseitigen Kupplung verbunden ist, mit einer Getriebehauptwelle, die axial hinter den Getriebeeingangswellen angeordnet und mit dem Sonnenrad verbunden ist, mit einer Getriebeausgangswelle, die axial hinter der Getriebehauptwelle angeordnet und ausgangsseitig mit dem Planetenträger verbunden ist, und mit Schaltvorrichtungen zum Schalten von Gängen oder Herstellen von Kraftschlussverbindungen.

Zur Lösung der gestellten Aufgabe sieht die Erfindung vor, dass über eine Schaltvorrichtung die innere Getriebeeingangswelle direkt mit der Getriebehauptwelle verbindbar ist, dass eine zusätzliche Hohlwelle koaxial auf der Getriebehauptwelle angeordnet ist, wobei auf der Hohlwelle wenigstens ein Losrad eines Vorwärtsganges der Hauptgruppe drehbar gelagert ist, welches über eine Schaltvorrichtung mit der Hohlwelle drehfest verbindbar ist, und dass die Hohlwelle über eine Schaltvorrichtung mit der Getriebehauptwelle und über eine Schaltvorrichtung mit dem Planetenträger verbindbar ist.

Dadurch, dass die Antriebswelle des Antriebsmotors über die innere Getriebeeingangswelle direkt auf die Getriebehauptwelle schaltbar ist, wird ein von diesem Leistungsstrang unabhängig schaltbarer zweiter Leistungsstrang über die dann frei drehenden Vorgelegewellen, die nicht mit der Antriebswelle und der Getriebehauptwelle verbunden sind, ermöglicht. Dieser ist bei der erfindungsgemäßen Anordnung mit einer zweiten Hohlwelle realisiert, auf welcher der Planetenträger der Bereichsgruppe direkt zuschaltbar ist, wodurch eine kraftschlüssige Verbindung zwischen dem Planetenträger und der antreibenden äußeren Getriebeeingangswelle herstellbar ist.

Somit wird durch die erfindungsgemäße Anordnung vorteilhaft erreicht, dass unabhängig voneinander über die Hauptgruppe und die Splittergruppe übersetzte Kraftschlussverbindungen zwischen der äußeren Getriebeeingangswelle sowie der Getriebeausgangswelle einerseits, und direkte Kraftschlussverbindungen zwischen der inneren Getriebeeingangswelle und der Getriebehauptwelle bzw. dem Sonnenrad der Bereichsgruppe mit anschließend wahlweise übersetzter Bereichsgruppe in einem unteren Gangbereich oder verblockter Bereichsgruppe in einem oberen Gangbereich schaltbar sind.

Weiterhin wird ein Verfahren zur Betätigung eines Doppelkupplungs-Gruppengetriebes beschrieben, mit einer Splittergruppe, einer Hauptgruppe und einer Bereichsgruppe, die in einem Antriebsstrang axial hintereinander angeordnet sind, bei dem die Splittergruppe und die Hauptgruppe als Vorgelegegetriebe mit zumindest einer gemeinsamen Vorgelegewelle und mit mehreren Gangkonstanten oder Gängen ausgebildet sind, und bei dem die Bereichsgruppe als ein Planetengetriebe mit einem radial äußeren Hohlrad, einem zentralen Sonnenrad und einem dazwischen wälzenden Planetenradsatz ausgebildet ist, wobei die Planetenräder von einem Planetenträger geführt sind, mit einer ersten, inneren Getriebeeingangswelle, die mit einer ersten eingangsseitigen Kupplung verbunden ist, mit einer zweiten, äußeren Getriebeeingangswelle, die als eine Hohlwelle koaxial auf der inneren Getriebeeingangswelle angeordnet und mit einer zweiten eingangsseitigen Kupplung verbunden ist, mit einer Getriebehauptwelle, die axial hinter den Getriebeeingangswellen angeordnet und mit dem Sonnenrad verbunden ist, mit einer Getriebeausgangswelle, die axial hinter der Getriebehauptwelle angeordnet und ausgangsseitig mit dem Planetenträger verbunden ist, und mit Schaltvorrichtungen zum Schalten von Gängen oder Herstellen von Kraftschlussverbindungen.

Das Verfahren sieht vor, dass bei einem Gangwechsel, bei dem ein Schaltvorgang der Bereichsgruppe vorgesehen ist, der Zielgang oder der Ursprungsgang über eine Kraftschlussverbindung mit dem Planetenträger geschaltet wird, welche über eine Hohlwelle, die koaxial auf der Getriebehauptwelle angeordnet ist, unabhängig von der Getriebehauptwelle hergestellt wird.

Insbesondere kann vorgesehen sein, dass gleichzeitig ein Direktgang der Vorgelegegetriebe, durch Schalten einer drehfesten direkten Verbindung der inneren Getriebeeingangswelle mit der Getriebehauptwelle, und ein zu diesem Direktgang benachbarter Gang, durch Schalten von drehfesten Verbindungen eines Losrades einer treibenden Gangkonstante mit der äußeren Getriebeeingangswelle, eines Losrades eines getriebenen Vorwärtsganges mit der Hohlwelle und des Planetenträger mit der Hohlwelle, vorwählbar sind.

Dies ermöglicht beispielsweise bei einem Hochschalten von einem Direktgang im unteren Gangbereich, d.h. vom höchsten Gang des unteren Gangbereich, in den nächst höheren Gang, d.h. in den niedrigsten Gang des oberen Gangbereichs, mit einer Schaltung der Bereichsgruppe, einen lastschaltbaren, komfortablen Gangwechsel. Bei einer solchen Hochschaltung kann also, während der Direktgang im unteren Gangbereich vor dem Wechsel in der Bereichsgruppe durch direktes Verbinden der inneren Getriebeeingangswelle mit der Getriebehauptwelle und Schließen der zugehörigen Eingangskupplung geschaltet ist, die erfindungsgemäße Hohlwelle auf der Getriebehauptwelle mit dem Planententräger und einem Gangrad bzw. einem Losrad, vorzugsweise des 1. Ganges, geschaltet werden. Dadurch ist die äußere Getriebeeingangswelle mit der Getriebeausgangswelle wirkverbunden. Eine Schaltvorrichtung zum Umschalten der Bereichsgruppe, bei dem der Kraftfluss zwischen einer Kopplung des Hohlrades mit einem Gehäuseteil für den übersetzten unteren Gangbereich oder einer Kopplung des Hohlrades mit dem Planetenträger für den oberen Gangbereich, bei dem das Planetengetriebe im Block umläuft, kann dabei in Neutral geschaltet werden. Für die anschließende Lastschaltung zum Gangwechsel wird lediglich überschneidend die geschlossene Eingangskupplung geöffnet und die andere Eingangskupplung geschlossen. Die Schaltung über die Bereichsgruppe wird somit vom Fahrer nicht mehr als störend bemerkt, wodurch der Fahrkomfort erhöht wird.

Außerdem ist erfindungsgemäß vorgesehen, dass die Splittergruppe insgesamt drei Gangkonstanten aufweist, von denen eine erste und eine zweite Gangkonstante auf der äußeren Getriebeeingangswelle und die dritte Gangkonstante auf der inneren Getriebeeingangswelle angeordnet sind, und dass die Hauptgruppe einen ersten Vorwärtsgang und einen Rückwärtsgang aufweist, die auf der zusätzlichen Hohlwelle angeordnet sind.

Bevorzugt kann vorgesehen sein, dass die Hauptgruppe zwei Vorwärtsgange und einen Rückwärtsgang aufweist, von denen der erste Gang und der Rückwärtsgang auf der Hohlwelle angeordnet sind und der zweite Gang auf der Hauptwelle angeordnet ist.

Dabei kann vorgesehen sein, dass die Hohlwelle einerseits über eine, auf der Hohlwelle angeordnete, einseitig betätigbare Schaltvorrichtung mit dem Planetenträger drehfest verbindbar ist, und andererseits über eine auf der Getriebehauptwelle angeordnete, ein- oder doppelseitig betätigbare Schaltvorrichtung mit der Getriebehauptwelle verbindbar ist.

Diese Getriebestruktur verfügt über insgesamt vierzehn Vorwärtsgänge mit lastschaltbarer Bereichsgruppe, wobei der siebte Gang als ein Direktgang im unteren Gangbereich und der vierzehnte Gang als ein Direktgang im oberen Gangbereich schaltbar sind, und die Gänge acht, neun und zehn über den Planetenträger schaltbar sind. Das Vierzehnganggetriebe ermöglicht eine relativ große Gesamtspreizung und einen besonders effizienten Fahrbetrieb im Nutzfahrzeugbereich.

Weiterhin kann eine zweite Getriebestruktur vorgesehen sein, bei der die Splittergruppe insgesamt drei Gangkonstanten aufweist, von denen eine erste und eine zweite Gangkonstante auf der äußeren Getriebeeingangswelle angeordnet sind und die dritte Gangkonstante auf der inneren Getriebeeingangswelie angeordnet ist. Bei dieser Getriebestruktur weist die Hauptgruppe einen Vorwärtsgang und einen Rückwärtsgang auf, die auf der zusätzlichen Hohlwelle angeordnet sind, und die Bereichsgruppe ist zwischen einem unteren übersetzten Gangbereich und einen oberen direkten Gangbereich umschaltbar.

Außerdem weist diese zweite Getriebestruktur vorzugsweise eine auf der Getriebehauptwelle angeordnete, doppelseitig betätigbare Schaltvorrichtung auf, so dass die Hohlwelle einerseits mit dem Planetenträger und andererseits mit der Getriebehauptwelle drehfest verbindbar ist.

Die zweite Getriebestruktur verfügt über insgesamt acht Vorwärtsgänge mit lastschaltbarer Bereichsgruppe, wobei der vierte Gang als ein Direktgang im unteren Gangbereich und der achte Gang als ein Direktgang im oberen Gangbereich schaltbar sind und die Gänge fünf, sechs und sieben über den Planententräger schaltbar sind. Gegenüber dem vierzehngängigen Getriebe kann eine Schaltvorrichtung eingespart werden, wodurch eine noch kürzere axiale Baulänge und eine Gewichtseinsparung erreichbar ist. Bei einem Getriebe gemäß der zweiten Getriebestruktur mit acht Vorwärtsgängen sind alle Gänge lastschaltbar.

Zur Verdeutlichung der Erfindung ist der Beschreibung eine Zeichnung eines Ausführungsbeispiels beigefügt. In dieser zeigt
- Fig. 1: eine erste Getriebestruktur eines Doppelkupplungs-Gruppengetriebes gemäß der Erfindung mit vierzehn Gängen,
- Fig. 2: eine Gangtabelle der vierzehngängigen Getriebestruktur,
- Fig. 3: eine zweite Getriebestruktur eines Doppelkupplungs-Gruppengetriebes gemäß der Erfindung mit acht Gängen, und
- Fig. 4: eine Gangtabelle der achtgängigen Getriebestruktur.

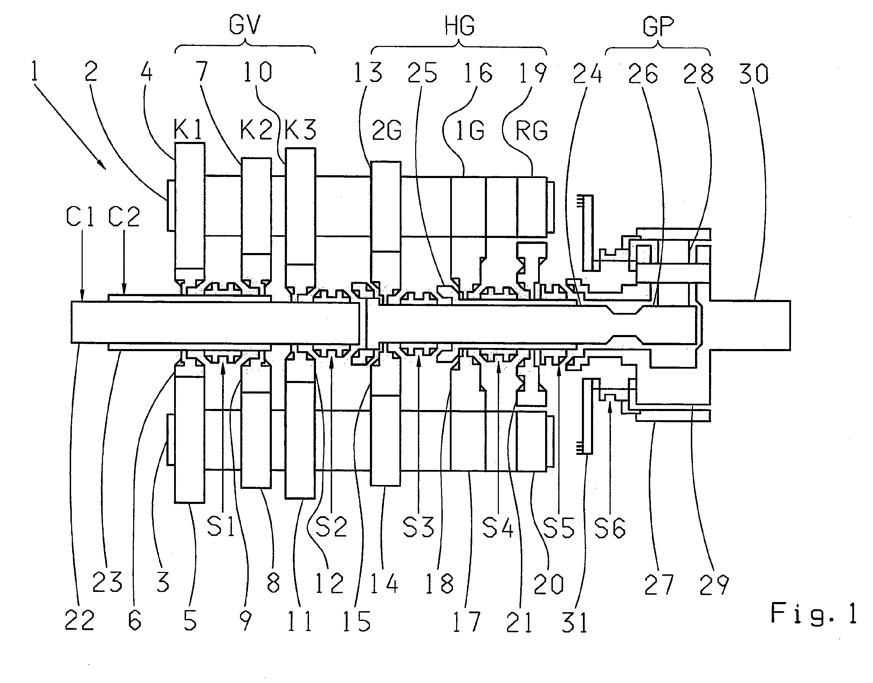

Demnach ist in Fig. 1 ein Schema einer ersten Getriebestruktur 1 eines Doppelkupplungs-Gruppengetriebes dargestellt, wie es beispielsweise für einen Lastkraftwagen vorgesehen sein kann. Die Getriebestruktur 1 umfasst drei Getriebegruppen GV, HG, GP. Eine eingangsseitige Splittergruppe GV mit drei Eingangskonstanten K1, K2, K3, eine Hauptgruppe HG mit einem ersten Gang 1 G, einem zweiten Gang 2G und einem Rückwärtsgang RG und eine Bereichsgruppe GP mit einem unteren Gangbereich GPL und einem oberen Gangbereich GPS sind axial hintereinander angeordnet.

Die Splittergruppe GV und die Hauptgruppe HG sind als Vorgelegegetriebe mit zwei gemeinsamen, achsparallelen Vorgelegewellen 2, 3 ausgebildet. Die Gangkonstanten K1, K2, K3 und die Gänge 2G, 1G, RG bilden Zahnradsätze mit jeweils zwei Festrädern 4,5; 7,8; 10,11; 13,14; 16,17; 19,20, welche auf den Vorgelegewellen 2, 3 angeordnet sind und jeweils einem Losrad 6, 9, 12, 15, 18 und 21, welches drehbar gelagert ist und mit dem zugehörigen Festradpaar 4,5; 7,8; 10,11; 13,14; 16,17; 19,20 im Eingriff steht. Der Radsatz des Rückwärtsganges RG weist zusätzlich zwei nicht dargestellte, drehbar gelagerte Zwischenräder zur Drehrichtungsumkehr auf. Da diese Vorgelegebauweise an sich bekannt ist, ist eine nähere Beschreibung der einzelnen Festräder und Losräder nicht notwendig.

Das Losrad 12 der motorfernen Gangkonstante K3 der Splittergruppe GV ist auf einer ersten, inneren Getriebeeingangswelle 22 angeordnet, welche mit einer ersten eingangsseitigen Motorkupplung C1 verbunden ist. Die Losräder 6 und 9 der beiden motornahen Gangkonstanten K1, K2 sind auf einer zweiten, äußeren Getriebeeingangswelle 23 angeordnet, welche mit einer zweiten eingangsseitigen Motorkupplung C2 verbunden ist. Die äußere Getriebeeingangswelle 23 ist als eine kürzere Höhlwelle ausgebildet, die koaxial auf der inneren Getriebeeingangswelle 22 angeordnet ist. Die beiden Motorkupplungen C1, C2 sind in Fig. 1 lediglich durch Pfeile angedeutet. Sie bilden eine ansteuerbare Doppelkupplung nach bekannter Bauart zur Herstellung einer kraftschlüssigen Verbindung der jeweiligen Getriebeeingangswelle 22, 23 mit einem nicht dargestellten Antriebsmotor.

Der Hauptgruppe HG ist eine Getriebehauptwelle 24 zugeordnet. Auf der Getriebehauptwelle 24 ist das Losrad 15 des zweiten Ganges 2G der Hauptgruppe HG angeordnet. Zusätzlich ist auf der Getriebehauptwelle 24 erfindungsgemäß eine Hohlwelle 25 koaxial angeordnet. Auf dieser Hohlwelle 25 sind die Losräder 18, 21 des ersten Ganges 1G und des Rückwärtsganges RG angeordnet.

Axial hinter der Hauptgruppe HG ist die Bereichsgruppe GP angeordnet, die ein zentrales Sonnenrad besitzt, welches mit dem motorfernen Ende der Getriebehauptwelle 24 fest verbunden ist, ein äußeres Hohlrad 27 und einen zwischen dem Hohlrad 27 und dem Sonnenrad 26 wälzenden Planetenradsatz 28, bei dem die Planetenräder von einem Planetenträger 29 geführt sind. Der Planetenträger 29 ist ausgangsseitig mit einer Getriebeausgangswelle 30 verbunden.

Zur Schaltung der Gänge bzw. Kraftschlussverbindungen sind insgesamt sechs Schaltvorrichtungen bzw. Gangkupplungen S1, S2, S3, S4, S5, S6, vorzugsweise mit Synchronisierungen, vorgesehen.

Die erste Schaltvorrichtung S1 ist auf der äußeren Getriebeeingangswelle 23 angeordnet und doppelseitig betätigbar. Sie stellt wahlweise eine drehfeste Verbindung des Losrades 6 der ersten Gangkonstante K1 oder des Losrades 9 der zweiten Gangkonstante K2 mit der äußeren Getriebeeingangswelle 23 her.

Die zweite Schaltvorrichtung S2 ist auf der inneren Getriebeeingangswelle 22 angeordnet und ebenfalls doppelseitig betätigbar. Sie stellt wahlweise eine drehfeste Verbindung des Losrades 12 der dritten Gangkonstante K3 mit der inneren Getriebeeingangswelle 22 oder eine Direktverbindung zwischen der inneren Getriebeeingangswelle 22 und dem motornahen Ende der Getriebehauptwelle 24 her.

Die dritte Schaltvorrichtung S3 ist auf der Getriebehauptwelle 24 angeordnet und wiederum doppelseitig betätigbar. Sie stellt wahlweise eine drehfeste Verbindung des Losrades 15 des zweiten Ganges 2G der Hauptgruppe HG mit der Getriebehauptwelle 24 oder eine drehfeste Verbindung zwischen der Getriebehauptwelle 24 und dem motornahen Ende der auf ihr angeordneten Hohlwelle 25 her.

Die vierte Schaltvorrichtung S4 ist auf der Hohlwelle 25 angeordnet und auch doppelseitig betätigbar. Sie stellt wahlweise eine drehfeste Verbindung des Losrades 18 des ersten Ganges 1 G der Hauptgruppe HG oder des Losrades 21 des Rückwärtsganges RG mit der Hohlwelle 25 her.

Die fünfte Schaltvorrichtung S5 ist ebenfalls auf der Hohlwelle 25 angeordnet und einseitig betätigbar. Sie stellt wahlweise eine drehfeste Verbindung zwischen dem motorfernen Ende der Hohlwelle 25 und dem Planetenträger 29 der Bereichsgruppe GP her.

Die sechste Schaltvorrichtung S6 ist der Bereichsgruppe GP zugeordnet. Sie koppelt wahlweise das Hohlrad 27 mit einem Gehäuseteil 31 für einen entsprechend dem Planetensatz 28 übersetzten unteren Gangbereich GPL oder das Hohlrad 27 mit dem Planetenträger 29, wodurch die Bereichsgruppe GP verblockt wird und zusammen mit der Getriebeausgangswelle 30 mit der Drehzahl der Getriebehauptwelle 24, also in einem oberen Gangbereich GPS mit Direktübersetzung 1:1 umläuft.

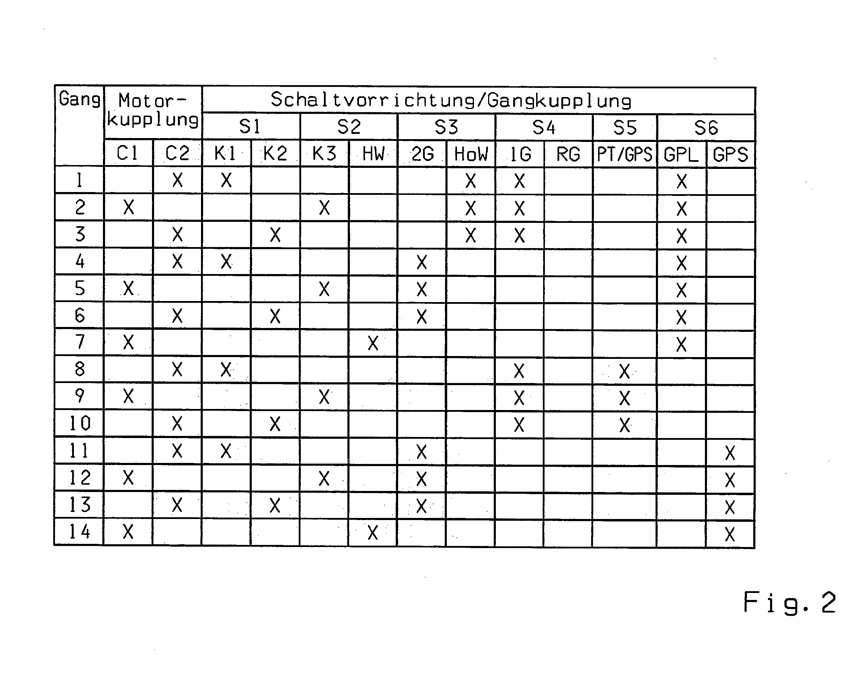

Durch die Kombinationen des Dreifach-Splitters GV mit dem zweigängigen Hauptgetriebe HG und dem Bereichsgetriebe GP ergeben sich vierzehn schaltbare Vorwärtsgänge. Die Schaltabfolge und die jeweils betätigten Schaltvorrichtungen S1, S2, S3, S4, S5, S6 gehen aus der Gangtabelle in Fig. 2 hervor.

In der ersten Spalte der Gangtabelle der Fig. 2 ist der jeweilige Gang aufgeführt. Die beiden folgenden Spalten zeigen die jeweils geschlossene Eingangskupplung C1, C2. Die Schaltstellungen sind jeweils in den Spalten der Gangkonstanten K1, K2, K3, Gänge 1G, 2G und Kraftschlussverbindungen HW (Hauptwelle 24), HoW (Hohlwelle 25) und PT (Planetenträger 29) durch eine "X" markiert. Die letzten beiden Spalten zeigen die jeweilige Koppelstellung der Schaltvorrichtung S6 der Bereichsgruppe GP. Der untere Gangbereich entspricht der Schaltstellung GPL, der obere Gangbereich entspricht der Schaltstellung GPS. Die Schaltstellung PT der Schaltvorrichtung S5 entspricht ebenfalls dem oberen Gangbereich, die Schaltvorrichtung S6 ist in dieser Schaltstellung redundant. Die der Schaltvorrichtung S4 zugeordneten, über den Rückwärtsgangradsatz RG schaltbaren Rückwärtsgangübersetzungen, sind selbstverständlich vorhanden, in der Tabelle aber nicht weiter berücksichtigt, da sie nicht erfindungsrelevant sind.

Aus der Gangtabelle der Fig. 2 wird deutlich, dass insbesondere der Gangwechsel zwischen dem siebten Gang als Direktgang im unteren Gangbereich GPL und dem achten Gang, d.h. dem ersten Gang im oberen Gangbereich GPS, lastschaltbar ist, da die beiden Gänge gleichzeitig eingelegt sein können und nur durch die Kupplung C1, C2 umgeschaltet wird. Entscheidend dabei ist, dass im achten Gang die Kraftflussverbindung zur Getriebeausgangswelle 30 über die Wirkverbindung der äußeren Getriebeeingangswelle 23 über die Vorgelegewellen 2, 3 und die direkte Verbindung der zweiten Hohlwelle 25 mit dem Planetenträger 29 geschaltet ist, während im siebten Gang die Kraftflussverbindung zur Getriebeausgangswelle 30 über die Direktverbindung zwischen der inneren Getriebeeingangswelle 22 mit der Getriebehauptwelle 24 und die Wirkverbindung der Getriebehauptwelle 24 über den Planetenradsatz 28 geschaltet ist.

Weiterhin geht aus der Gangtabelle der Fig. 2 hervor, dass bis auf die Gangwechsel 3.Gang - 4.Gang und 10.Gang - 11.Gang auch alle anderen Gangwechsel lastschaltbar sind. Da die beiden angesprochenen zugkraftunterbrochenen Gangwechsel jedoch nicht einem Gangbereichswechsel verbunden sind, sind sie relativ schnell durchführbar und damit für den Fahrer weniger störend. Die Gänge neun und zehn sind zudem über die Hohlwelle 25 und den Planetenträger 29 geschaltet, da deren Kraftfluss über den ersten Gang 1 G verzweigt, welcher auf der Hohlwelle 25 angeordnet ist. Die Umschaltung der Schaltvorrichtung S6 erfolgt erst im 11. Gang. Der höchste Gang, also der vierzehnte Gang, ist der Direktgang des Gesamtgetriebes der Getriebestruktur 1.

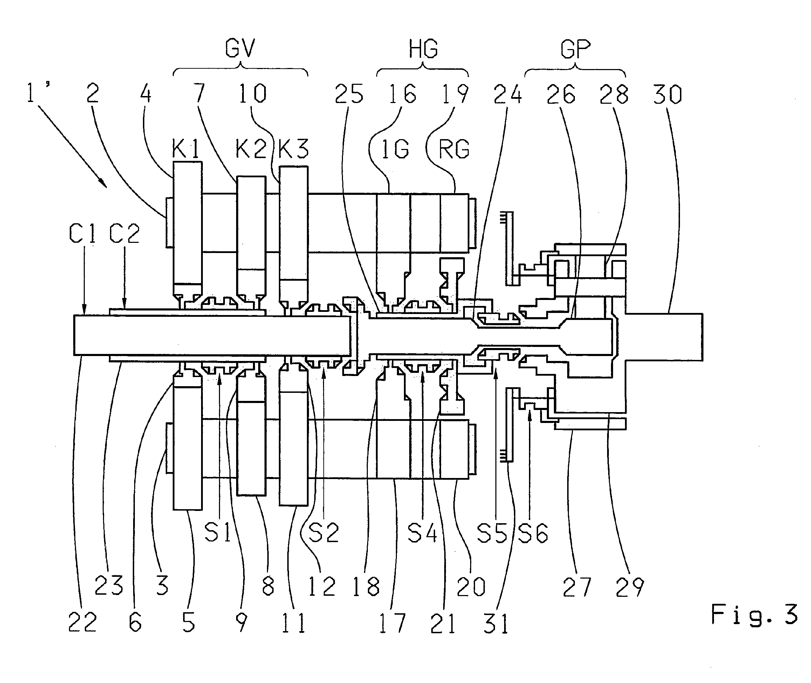

Fig. 3 zeigt eine ähnliche Getriebestruktur 1', die jedoch nur über acht Gänge verfügt. Zur Vereinfachung sind darin vergleichbare Bauteile mit den gleichen Bezugszeichen wie in Fig. 1 versehen. Ein wesentlicher Unterschied ist der Wegfall des zweiten Ganges 2G der Hauptgruppe HG sowie der Schaltvorrichtung S3. Die Schaltvorrichtung S5 ist außerdem auf der Getriebehauptwelle 24 angeordnet und doppelseitig betätigbar. Sie stellt wahlweise eine drehfeste Verbindung zwischen der Hohlwelle 25 und der Getriebehauptwelle 24 oder zwischen der Hohlwelle 25 und dem Planetenträger 29 her.

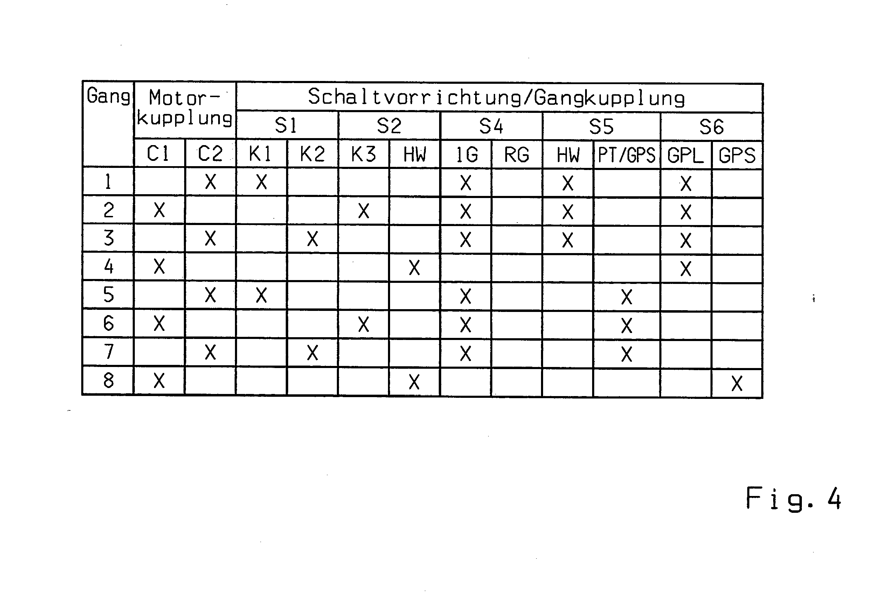

Die Funktionsweise der Getriebestruktur 1' ist vergleichbar mit der Funktionsweise der in Fig. 1 dargestellten Getriebestruktur 1. Allerdings ist dieses Getriebe vollständig lastschaltbar, wie aus der in Fig. 4 gezeigten zugehörigen Gangtabelle entnehmbar.

Der Direktgang im langsameren unteren Gangbereich GPL ist der vierte Gang. Der Gangwechsel vom vierten Gang in den fünften Gang mit einem Gangbereichswechsel in den schnelleren oberen Gangbereich GPS ist wiederum mit Hilfe der Schaltung der Hohlwelle 25 mit dem Planetenträger 29 lastgeschaltet. An dem Gangwechsel sind die gleichen Schaltstellungen bzw. Kraftschlussverbindungen wie beim vergleichbaren bereits erläuterten Gangwechsel vom Z.Gang zum 8.Gang der Getriebestruktur 1 beteiligt.

Die Gänge fünf, sechs und sieben sind auch über die Hohlwelle 25 und den Planetenträger 29 geschaltet, da deren Kraftfluss wiederum über den ersten Gang 1 G verzweigt, welcher auf der Hohlwelle 25 angeordnet ist. Lediglich für den achten Gang als Direktgang des Gesamtgetriebes der Getriebestruktur 1' wird die Schaltvorrichtung S6 auf die entsprechende Schaltstellung GPS umgeschaltet.

### Bezugszeichenliste

- 1, 1': Getriebestruktur
- 2: Vorgelegewelle
- 3: Vorgelegewelle
- 4: Festrad erste Gangkonstante
- 5: Festrad erste Gangkonstante
- 6: Losrad erste Gangkonstante
- 7: Festrad zweite Gangkonstante
- 8: Festrad zweite Gangkonstante
- 9: Losrad zweite Gangkonstante
- 10: Festrad dritte Gangkonstante
- 11: Festrad dritte Gangkonstante
- 12: Losrad dritte Gangkonstante
- 13: Festrad zweiter Hauptgruppengang
- 14: Festrad zweiter Hauptgruppengang
- 15: Losrad zweiter Hauptgruppengang
- 16: Festrad erster Hauptgruppengang
- 17: Festrad erster Hauptgruppengang
- 18: Losrad erster Hauptgruppengang
- 19: Festrad Rückwärtsgang
- 20: Festrad Rückwärtsgang
- 21: Losrad Rückwärtsgang
- 22: Innere Getriebeeingangswelle
- 23: Äußere Getriebeeingangswelle
- 24: Getriebehauptwelle
- 25: Hohlwelle
- 26: Sonnenrad
- 27: Hohlrad
- 28: Planetenradsatz
- 29: Planetenträger
- 30: Getriebeausgangswelle
- 31: Gehäuseteil
- 1G: Erster Hauptgruppengang
- 2G: Zweiter Hauptgruppengang
- C1: Erste eingangsseitige Kupplung
- C2: Zweite eingangsseitige Kupplung
- GV: Splittergruppe
- GP: Bereichsgruppe
- GPL: Unterer Gangbereich
- GPS: Oberer Gangbereich
- HG: Hauptgruppe
- HoW: Hohlwelle 25
- HW: Getriebehauptwelle 24
- K1: Erste Gangkonstante
- K2: Zweite Gangkonstante
- K3: Dritte Gangkonstante
- RG: Rückwärtsgang
- S1: Erste Schaltvorrichtung
- S2: Zweite Schaltvorrichtung
- S3: Dritte Schaltvorrichtung
- S4: Vierte Schaltvorrichtung
- S5: Fünfte Schaltvorrichtung
- S6: Sechste Schaltvorrichtung
- PT: Planetenträger 29

## Patentansprüche

1. Doppelkupplungs-Gruppengetriebe, mit einer Splittergruppe (GV), einer Hauptgruppe (HG) und einer Bereichsgruppe (GP), die in einem Antriebsstrang axial hintereinander angeordnet sind, bei dem die Splittergruppe (GV) und die Hauptgruppe (HG) als Vorgelegegetriebe mit zumindest einer gemeinsamen Vorgelegewelle (2, 3) und mit mehreren Gangkonstanten (K1, K2, K3) oder Gängen (1 G, 2G, RG) ausgebildet sind, bei dem die Bereichsgruppe (GP) als ein Planetengetriebe mit einem radial äußeren Hohlrad (27), einem zentralen Sonnenrad (26) und einem dazwischen wälzenden Planetenradsatz (28) ausgebildet ist, wobei die Planetenräder von einem Planetenträger (29) geführt sind, wobei die Bereichsgruppe (GP) zwischen einem unteren übersetzten Gangbereich (GPL) und einen oberen direkten Gangbereich (GPS) umschaltbar ist,
mit einer ersten, inneren Getriebeeingangswelle (22), die mit einer ersten eihgangsseitigen Kupplung (C1) verbunden ist,
mit einer zweiten, äußeren Getriebeeingangswelle (23), die als eine Hohlwelle koaxial auf der inneren Getriebeeingangswelle (22) angeordnet und mit einer zweiten eingangsseitigen Kupplung (C2) verbunden ist,
mit einer Getriebehauptwelle (24), die axial hinter den Getriebeeingangswellen (22, 23) angeordnet und mit dem Sonnenrad (26) verbunden ist,
mit einer Getriebeausgangswelle (30), die axial hinter der Getriebehauptwelle (24) angeordnet und ausgangsseitig mit dem Planetenträger (29) verbunden ist, und
mit Schaltvorrichtungen (S1, S2, S3, S4, S5, S6) zum Schalten von Gängen oder Herstellen von Kraftschlussverbindungen, wobei über eine Schaltvorrichtung (S2) die innere Getriebeeingangswelle (22) direkt mit der Getriebehauptwelle (24) verbindbar ist, wobei eine zusätzliche Hohlwelle (25) koaxial auf der Getriebehauptwelle (24) angeordnet ist, auf der (25) wenigstens ein Losrad (18) eines Vorwärtsganges (1 G) der Hauptgruppe (HG) drehbar gelagert ist, welches über eine Schaltvorrichtung (S4) mit der Hohlwelle drehfest verbindbar ist, und wobei die Hohlwelle (25) über eine Schaltvorrichtung (S3, S5) mit der Getriebehauptwelle (24) und über eine Schaltvorrichtung (S5) mit dem Planetenträger (29) verbindbar ist, **dadurch gekennzeichnet, dass** die Splittergruppe (GV) insgesamt drei Gangkonstanten (K1, K2, K3) aufweist, von denen eine erste und eine zweite Gangkonstante (K1, K2) auf der äußeren Getriebeeingangswelle (23) und die dritte Gangkonstante (K3) auf der inneren Getriebeeingangswelle (22) angeordnet sind, und dass die Hauptgruppe (HG) einen ersten Vorwärtsgang (1G) und einen Rückwärtsgang (RG) aufweist, die auf der Hohlwelle (25) angeordnet sind.

2. Doppelkapplungs-Gruppengetriebe nach Anspruch 1, **dadurch gekennzeichnet, dass** die Hauptgruppe (HG) einen zweiten Vorwärtsgang (2G) aufweist, der auf der Getriebehauptwelle (24) angeordnet ist.

3. Doppelkupplungs-Gruppengetriebe nach Anspruch 2, **dadurch gekennzeichnet, dass** gleichzeitig ein Direktgang der Vorgelegegetriebe (GV, HG), durch Schalten einer drehfesten direkten Verbindung der inneren Getriebeeingangswelle (22) mit der Getriebehauptwelle (24), und ein zu diesem Direktgang benachbarter Gang, durch Schalten von drehfesten Verbindungen eines Losrades (6) einer treibenden Gangkonstante mit der äußeren Getriebeeingangswelle (23), eines Losrades (18) eines getriebenen Vorwärtsganges mit der Hohlwelle (25) und des Planetenträgers (29) mit der Hohlwelle (25), vorwählbar sind.

4. Doppelkupplungs-Gruppengetriebe nach Anspruch 2 oder 3, **dadurch gekennzeichnet, dass** die Hohlwelle (25) einerseits über eine auf der Hohlwelle (25) angeordnete, einseitig betätigbare Schaltvorrichtung (S5) mit dem Planetenträger (29) drehfest verbindbar ist, und andererseits über eine auf der Getriebehauptwelle (24) angeordnete, ein- oder doppelseitig betätigbare Schaltvorrichtung (S3) mit der Getriebehauptwelle (24) verbindbar ist.

5. Doppelkupplungs-Gruppengetriebe nach Anspruch 3 oder 4, **dadurch gekennzeichnet, dass** die drei Getriebegruppen (GV, HG, GP) über insgesamt vierzehn Vorwärtsgänge verfügen, wobei der siebte Gang als ein Direktgang im unteren Gangbereich (GPL) und der vierzehnte Gang als ein Direktgang im oberen Gangbereich (GPS) schaltbar sind, und die Gänge acht, neun und zehn über den Planetenträger (29) schaltbar sind.

6. Doppelkupplungs-Gruppengetriebe nach Anspruch 1, **dadurch gekennzeichnet, dass** die Hohlwelle (25) über eine, auf der Getriebehauptwelle (24) angeordnete, doppelseitig betätigbare Schaltvorrichtung (S5) einerseits mit dem Planetenträger (29) und andererseits mit der Getriebehauptwelle (24) drehfest verbindbar ist.

7. Doppelkupplungs-Gruppengetriebe nach Anspruch 1 oder 6, **dadurch gekennzeichnet, dass** die drei Getriebegruppen (GV, HG, GP) über insgesamt acht Vorwärtsgänge verfügen, wobei der vierte Gang als ein Direktgang im unteren Gangbereich (GPL) und der achte Gang als ein Direktgang im oberen Gangbereich (GPS) schaltbar sind, und die Gänge fünf, sechs und sieben über den Planententräger (29) schaltbar sind.

## Claims

1. Dual-clutch group transmission, having a splitter group (GV), a main group (HG) and a range group (GP) which are arranged axially in series in a drivetrain, in which the splitter group (GV) and the main group (HG) are in the form of countershaft transmissions with at least one common countershaft (2, 3) and with multiple gear constants (K1, K2, K3) or gears (1G, 2G, RG), in which the range group (GP) is in the form of a planetary transmission with a radially outer internal gear (27), a central sun gear (26) and a planet gear set (28) rolling therebetween, wherein the planet gears are guided by a planet carrier (29), wherein the range group (GP) can be switched between a lower gear range (GPL) with step-up ratio and an upper, direct gear range (GPS),
having a first, inner transmission input shaft (22) which is connected to a first input-side clutch (C1), having a second, outer transmission input shaft (23) which, as a hollow shaft, is arranged coaxially on the inner transmission input shaft (22) and is connected to a second input-side clutch (C2),
having a transmission main shaft (24) which is arranged axially downstream of the transmission input shafts (22, 23) and which is connected to the sun gear (26), having a transmission output shaft (30) which is arranged axially downstream of the transmission main shaft (24) and which is connected to the output side of the planet carrier (29), and
having shift devices (S1, S2, S3, S4, S5, S6) for shifting gears or producing power-transmitting connections, wherein the inner transmission input shaft (22) is connectable directly to the transmission main shaft (24) by means of a shift device (S2), wherein an additional hollow shaft (25) is arranged coaxially on the transmission main shaft (24), on which additional hollow shaft (25) there is rotatably mounted at least one sliding gear (18) of a forward gear (1G) of the main group (HG), said sliding gear being connectable rotationally conjointly to the hollow shaft by means of a shift device (S4), and wherein the hollow shaft (25) is connectable to the transmission main shaft (24) by means of a shift device (S3, S5) and is connectable to the planet carrier (29) by means of a shift device (S5), **characterized in that** the splitter group (GV) has a total of three gear constants (K1, K2, K3), of which a first and a second gear constant (K1, K2) are arranged on the outer transmission input shaft (23) and the third gear constant (K3) is arranged on the inner transmission input shaft (22), and **in that** the main group (HG) has a first forward gear (1G) and a reverse gear (RG) which are arranged on the hollow shaft (25).

2. Dual-clutch group transmission according to Claim 1, **characterized in that** the main group (HG) has a second forward gear (2G) which is arranged on the transmission main shaft (24).

3. Dual-clutch group transmission according to Claim 2, **characterized in that** it is possible to realize simultaneous preselection of a direct gear of the countershaft transmission (GV, HG), by engagement of a rotationally conjoint direct connection between the inner transmission input shaft (22) and the transmission main shaft (24), and of a gear adjacent to said direct gear, by engagement of rotationally conjoint connections between a sliding gear (6) of a driving gear constant and the outer transmission input shaft (23), between a sliding gear (18) of a driven forward gear and the hollow shaft (25) and between the planet carrier (29) and the hollow shaft (25).

4. Dual-clutch group transmission according to Claim 2 or 3, **characterized in that** the hollow shaft (25) is both connectable rotationally conjointly to the planet carrier (29) by means of a unilaterally actuable shift device (S5) arranged on the hollow shaft (25), and connectable to the transmission main shaft (24) by means of a unilaterally or bilaterally actuable shift device (S3) arranged on the transmission main shaft (24).

5. Dual-clutch group transmission according to Claim 3 or 4, **characterized in that** the three transmission groups (GV, HG, GP) have a total of fourteen forward gears, wherein the seventh gear can be engaged as a direct gear in the lower gear range (GPL) and the fourteenth gear can be engaged as a direct gear in the upper gear range (GPS), and gears eight, nine and ten can be engaged via the planet carrier (29).

6. Dual-clutch group transmission according to Claim 1, **characterized in that** the hollow shaft (25) is connectable rotationally conjointly both to the planet carrier (29) and to the transmission main shaft (24) by means of a bilaterally actuable shift device (S5) arranged on the transmission main shaft (24).

7. Dual-clutch group transmission according to Claim 1 or 6, **characterized in that** the three transmission groups (GV, HG, GP) have a total of eight forward gears, wherein the fourth gear can be engaged as a direct gear in the lower gear range (GPL) and the eighth gear can be engaged as a direct gear in the upper gear range (GPS), and gears five, six and seven can be engaged via the planet carrier (29).

## Revendications

1. Transmission à groupe-relais à double embrayage, comprenant un doubleur de gamme (GV), un groupe principal (HG) et un groupe-relais (GP) qui sont disposés dans une chaîne cinématique axialement les uns derrière les autres, le doubleur de gamme (GV) et le groupe principal (HG) étant réalisés sous forme de transmission de renvoi avec au moins un arbre de renvoi commun (2, 3) et avec plusieurs constantes de rapport (K1, K2, K3) ou rapports (1G, 2G, RG), le groupe-relais (GP) étant réalisé sous forme de transmission planétaire avec une couronne dentée radialement extérieure (27), une roue solaire centrale (26) et un train planétaire (28) roulant entre elles, les satellites étant guidés par un porte-satellites (29), le groupe-relais (GP) pouvant être commuté entre une plage de rapports de réduction inférieure (GPL) et une plage de rapports supérieure directe (GPS),
avec un premier arbre d'entrée de transmission intérieur (22) qui est connecté à un premier embrayage (C1) du côté de l'entrée,
avec un deuxième arbre d'entrée de transmission extérieur (23) qui est disposé, sous forme d'arbre creux, coaxialement sur l'arbre d'entrée de transmission intérieur (22) et qui est connecté à un deuxième embrayage (C2) du côté de l'entrée, avec un arbre de transmission principal (24), qui est disposé axialement derrière les arbres d'entrée de transmission (22, 23) et qui est connecté à la roue solaire (26),
avec un arbre de sortie de transmission (30) qui est disposé axialement derrière l'arbre de transmission principal (24) et qui est connecté du côté de la sortie au porte-satellites (29), et avec des dispositifs de commutation (S1, S2, S3, S4, S5, S6) pour commuter des rapports ou pour établir des connexions par engagement par force, l'arbre d'entrée de transmission intérieur (22) pouvant être connecté directement à l'arbre de transmission principal (24) par le biais d'un dispositif de commutation (S2), un arbre creux supplémentaire (25) étant disposé coaxialement sur l'arbre de transmission principal (24), sur lequel (25) au moins un pignon fou (18) d'un rapport de marche avant (1G) du groupe principal (HG) est supporté de manière rotative, lequel peut être connecté de manière solidaire en rotation à l'arbre creux par le biais d'un dispositif de commutation (S4), et l'arbre creux (25) pouvant être connecté à l'arbre de transmission principal (24) par le biais d'un dispositif de commutation (S3, S5) et au porte-satellites (29) par le biais d'un dispositif de commutation (S5), **caractérisée en ce que** le doubleur de gamme (GV) présente au total trois constantes de rapport (K1, K2, K3) dont une première et une deuxième constante de rapport (K1, K2) sont disposées sur l'arbre d'entrée de transmission extérieur (23) et la troisième constante de rapport (K3) est disposée sur l'arbre d'entrée de transmission intérieur (22), et **en ce que** le groupe principal (HG) présente un premier rapport de marche avant (1G) et un rapport de marche arrière (RG), qui sont disposés sur l'arbre creux (25).

2. Transmission à groupe-relais à double embrayage selon la revendication 1, **caractérisée en ce que** le groupe principal (HG) présente un deuxième rapport de marche avant (2G) qui est disposé sur l'arbre de transmission principal (24).

3. Transmission à groupe-relais à double embrayage selon la revendication 2, **caractérisée en ce que** l'on peut présélectionner simultanément un rapport direct de la transmission de renvoi (GV, HG) par commutation d'une connexion directe solidaire en rotation de l'arbre d'entrée de transmission intérieur (22) à l'arbre de transmission principal (24), et un rapport adjacent à ce rapport direct par commutation de connexions solidaires en rotation d'un pignon fou (6) d'une constante de rapport d'entraînement à l'arbre d'entrée de transmission extérieur (23), d'un pignon fou (18) d'un rapport de marche avant entraîné à l'arbre creux (25) et du porte-satellites (29) à l'arbre creux (25).

4. Transmission à groupe-relais à double embrayage selon la revendication 2 ou 3, **caractérisée en ce que** l'arbre creux (25) peut être connecté de manière solidaire en rotation d'une part, par le biais d'un dispositif de commutation (S5) pouvant être actionné d'un côté, disposé sur l'arbre creux (25), au porte-satellites (29), et d'autre part, par le biais d'un dispositif de commutation (S3) pouvant être actionné d'un côté ou des deux côtés, disposé sur l'arbre de transmission principal (24), à l'arbre de transmission principal (24).

5. Transmission à groupe-relais à double embrayage selon la revendication 3 ou 4, **caractérisée en ce que** les trois groupes de transmission (GV, HG, GP) disposent de quatorze rapports de marche avant au total, le septième rapport pouvant être commuté en tant que rapport direct dans la plage de rapports inférieure (GPL) et le quatorzième rapport pouvant être commuté en tant que rapport direct dans la plage de rapports supérieure (GPS), et les rapports huit, neuf et dix pouvant être commutés par le biais du porte-satellites (29).

6. Transmission à groupe-relais à double embrayage selon la revendication 1, **caractérisée en ce que** l'arbre creux (25) peut être connecté de manière solidaire en rotation, par le biais d'un dispositif de commutation (S5) pouvant être actionné des deux côtés, disposé sur l'arbre de transmission principal (24), d'une part au porte-satellites (29) et d'autre part à l'arbre de transmission principal (24).

7. Transmission à groupe-relais à double embrayage selon la revendication 1 ou 6, **caractérisée en ce que** les trois groupes de transmission (GV, HG, GP) disposent au total de huit rapports de marche avant, le quatrième rapport pouvant être commuté en tant que rapport direct dans la plage de rapports inférieure (GPL) et le huitième rapport pouvant être commuté en tant que rapport direct dans la plage de rapports supérieure (GPS), et les rapports cinq, six et sept pouvant être commutés par le biais du porte-satellites (29).
